# EUROPÄISCHE PATENTSCHRIFT

(11) **EP 4 596 946 B1**
(45) Veröffentlichungstag und Bekanntmachung des Hinweises auf die Patenterteilung: **23.09.2026**
(21) Anmeldenummer: 25152789.1
(22) Anmeldetag: 20.01.2025
(51) Int. Cl.: F16M 11/04, F16M 13/02

(54) **HALTERUNGSSYSTEM FÜR EIN TABLET**
TABLET HOLDING SYSTEM
SYSTÈME DE SUPPORT POUR TABLETTE

(30) Priorität: 26.01.2024 DE 202024100408 U
(43) Veröffentlichungstag der Anmeldung: 06.08.2025
(73) Patentinhaber: Displine GmbH, 65189 Wiesbaden (DE)
(72) Erfinder: Stanczyk, Piotr, 65189 Wiesbaden (DE); Nedzi, Bartlomiej, 26-600 Radom (PL)
(74) Vertreter: Farago-Schauer, Peter Andreas

(56) Entgegenhaltungen:
- WO-A1-2017/004072
- US-A1- 2011 034 220
- US-B2- 10 239 467
- US-B2- 8 872 023

## Beschreibung

Die Erfindung betrifft ein Halterungssystem für ein Tablet.

Im Stand der Technik ist es bekannt, Halterungen für Tablets herzustellen, wobei die Tablets in einem Rahmen aufnehmbar sind. Der Rahmen kann beispielsweise als Wandhalterung oder als Tischhalterung ausgebildet sein und eine Schnapp- oder Klippverbindung aufweisen, um das Tablet darin sicher aufzunehmen. Allerdings ist die Einführung des Tablets angesichts der Schnapp- oder Klippverbindung kompliziert und die Schnapp- oder Klippverbindung kann den Rand des Tablets beschädigen.

Eine weitere Halterung für Tablets ist in der US20170003712 A1 offenbart. Bei dieser bekannten Halterung wird das Tablet über die offene Seite eines Rahmens in Seitenführungen des Rahmens eingeführt bzw. eingeschoben und über einen an der offenen des Rahmens bereitgestellten Clip gesichert. Bei der Einführung oder Einschiebung des Tablets kann dieses von den Seitenführungen beschädigt werden.

Weitere Halterungssysteme mit einem an einer Seite offenen Rahmen und einer am Rahmen angebrachten Rückplatte sind ebenfalls in Stand der Technik bekannt, wobei der Rahmen analog zur US20170003712 Seitenführungen aufweist. Bei derartigen bekannten Halterungssysteme ist eine gute Stabilität aufgrund der Rückplatte gewährleistet, da die Rückplatte den Rahmen an seiner Rückseite vollflächig abschließt. Allerdings kann bei derartigen Halterungssystemen das Tablet bei seiner Einführung oder Einschiebung in den Rahmen von der Rückplatte und/oder von den Seitenführungen beschädigt werden. Eine weitere Halterung ist in der US2011/034220A offenbart.

Der hier vorliegenden Erfindung liegt die Aufgabe zugrunde, dem Stand der Technik eine Verbesserung oder eine Alternative zur Seite zu stellen. Insbesondere soll ein stabiles Halterungssystem mit einer verbesserten Halterung des Tablets bereitgestellt werden, worin das Tablet während seiner Einführung oder Einschiebung nicht beschädigt wird.

Im Rahmen dieser Aufgabe besteht eine weitere Aufgabe der Erfindung in der Bereitstellung eines Halterungssystem, das einen stabilen Rahmen aufweist, der für eine schonende Einführung des Tablets sorgt, wobei die Rückseite des Rahmens zur Wahrung der Stabilität mindestens teilweise verschlossen ist. Dabei soll die Rückseite des Rahmens sowohl für die schonende Einführung des Tablets als auch für die Stabilität des Rahmens sorgen. Auch soll in Rahmen der obigen Aufgabe die Rückseite des Rahmens leicht verschiedentlich ausgebildet bzw. ausgestaltet werden können, ohne dabei die Stabilität des Rahmens zu beeinträchtigen.

Nach einem ersten Aspekt löst die gestellte Aufgabe ein Halterungssystem für ein Tablet, wobei das Halterungssystem Folgendes umfasst: ein Rahmenelement; eine Rückplatte, die vom Rahmenelement teilweise umgeben ist, wobei das Rahmenelement und die Rückplatte an einer Innenseite des Rahmenelements einen Aufnahmeraum für das Tablet bestimmen; eine Führung, die sich zumindest teilweise an der Innenseite des Rahmenelements erstreckt und zur Einführung und Aufnahme des Tablets in den Aufnahmeraum ausgebildet ist; eine starre Abdeckplatte, die lösbar mit dem Rückplatte verbunden ist und den Aufnahmeraum zumindest teilweise abdeckt; und eine Überzugsschicht aus Leder, Lederimitat- oder Vliesstoff, die die starre Abdeckplatte an einer von der Rückplatte abgewandten Seite mindestens teilweise abdeckt und die fest mit der starren Abdeckplatte verbunden ist. Die Kombination aus Rückplatte, starrer Abdeckplatte und Überzugsschicht stellt eine stabile Anordnung bereit, die eine beschädigungsfreie Einführung des Tablets in den Rahmen erlaubt. Auch werden Beschädigungen des Tablets in einem im Halterungssystem aufgenommen Zustand aufgrund der Beschaffenheit des Überzugsschicht vermieden. Die lösbare Ausbildung der starren Abdeckplatte gestattet darüber hinaus einen leichten Austausch der starren Abdeckplatte samt Überzugsschicht, so dass verschiedentliche Überzugschichten mit unterschiedlichen Oberflächen zur Führung und Aufnahme des Tablets zur Verfügung gestellt werden können. Synergistisch kann die starre Abdeckplatte Aufnahmen, Öffnungen oder Bohrungen in der Rückplatte, wie etwa durchgehende Bohrungen zur Aufnahme von Schrauben für die Wandbefestigung einer Wandversion des Halterungssystems oder durchgehende Bohrungen für die Befestigung einer Stütze der Tischversion oder eingelassene Aufnahmen für Magnete oder weitere Durchbrüche, gleichzeitig abdecken. Gleiches gilt für etwaige Befestigungen einer Stütze in einer Tischversion des Halterungssystems. Die Kombination aus starrer Abdeckplatte und sanfter Überzugsschicht ermöglicht eine leichte Herausnahme der Abdeckplatte samt Überzugsschicht aus dem Aufnahmeraum.

Die Führung kann erfindungsgemäß eine Führungsfunktion beim Einführen des Tablets in das Rahmenelement und/oder eine Haltefunktion im eingeführten Zustand des Tablets haben.

Erfindungsgemäß bezeichnet der Begriff "Rahmenelement" eine Teilumrandung, dessen Vorder- und Rückseiten offen sind. Die erfindungsgemäße Rückplatte verschließt das Rahmenelement vollständig oder teilweise an der Rückseite, so dass zumindest die Vorderseite offenbleibt und das Tablet von der Vorderseite her zugänglich ist. Erfindungsgemäß können das Rahmenelement und die Rückseite einstückig oder integral ausgebildet werden, wobei die einstückige Ausbildung die Stabilität des Halterungssystems erhöht und seine Herstellung erleichtert. Es ist jedoch erfindungsgemäß auch denkbar, dass das Rahmenelement und die Rückseite, als gentrennte Elemente hergestellt werden, um anschließend fest miteinander zu einem integralen Aufbau verbunden zu werden.

Vorzugsweise deckt die Überzugsschicht die starre Abdeckplatte an der von der Rückplatte abgewandten Seite vollständig ab, so dass die gesamte Fläche der Abdeckplatte für die schonende Führung und Aufnahme des Tablets im Rahmenelement bzw. Halterungssystem zur Verfügung steht.

Vorzugsweise deckt die starre Abdeckplatte den Aufnahmeraum vollständig ab, so dass die gesamte Fläche des Aufnahmeraums für die schonende Führung und Aufnahme des Tablets im Rahmenelement bzw. Halterungssystem zur Verfügung steht bzw. dazu beiträgt. Auch können in dieser Ausbildung sämtlich Öffnungen und/oder Bohrungen und/oder Aufnahmen und/oder Durchbrüche der Rückplatte von der starren Abdeckplatte cachiert werden. Durch die so vergrößerte Überzugsschicht entsteht auch eine gleichmäßige Fläche im gesamten Aufnahmeraum.

Weiter kann vorzugsweise die starre Abdeckplatte magnetisch mit der Rückplatte verbunden sein, um eine leichte Lösbarkeit, und somit Austauschbarkeit der Abdeckplatte zu realisieren. Im Rahmen dieser Ausbildung kann die starre Abdeckplatte vorzugsweise aus Metall ausgebildet sein und die Rückplatte kann ein magnetisches Material umfassen, wobei weiter bevorzugt das magnetische Material als mindestens ein diskreter (einzelner) Magnet in einer entsprechenden Magnetaufnahme der Rückplatte ausgebildet sein kann. Die Ausbildung mit einem oder mehreren Magneten ist insofern vorteilhaft, da nur Teile der Rückplatte magnetische Eigenschaften haben muss. Somit kann Magnetmaterial eingespart werden und die Magnetaufnahmen in der Rückplatte sind im montierten Zustand der starren Abdeckplatte nicht sichtbar, sofern die Erstreckung der Rückplatte ausreichend ist. Darüber hinaus kann vorteilhaft die Rückplatte aus einem nicht magnetischen Material, wie etwa Aluminium, hergestellt werden.

Weiter kann vorzugsweise auch die Überzugsschicht auf der starren Abdeckplatte mit einem Kleber aufgeklebt werden. Auch ist eine Auflaminierung erfindungsgemäß denkbar, wobei die Klebeverbindung aufgrund ihrer leichteren Herstellbarkeit die bevorzugte Verbindung der starren Abdeckplatte mit der Überzugsschicht ist.

Nach einer bevorzugten Ausbildung erstreckt sich die Führung an der gesamten Innenseite des Rahmenelements. Somit kann insbesondere eine bessere Führung und/oder eine stabilere Aufnahme des Tablets im Rahmenelement bzw. im Halterungssystem erzielt werden. Dabei ist zu beachten, dass erfindungsgemäß die Führung eine Führungsfunktion beim Einführen des Tablets in das Rahmenelement und/oder eine Haltefunktion in dem im Rahmenelement eingeführten Zustand des Tablets haben kann.

In einer bevorzugten Weiterbildung kann die Führung zwischen einem Überstand an der Innenseite des Rahmenelements und der Rückplatte ausgebildet werden, so dass das Tablet zwischen dem Überstand und der Rückplatte in das Halterungssystem einführbar ist und gehalten werden kann. Vorteilhaft ist der Überstand einstückig mit dem Rahmenelement ausgebildet. Sofern das Rahmenelement einstückig mit der Rückplatte ausgebildet ist, kann der Überstand auch Teil einer gesamten einstückigen Anordnung aus Rahmenelement und Rückplatte sein.

In einer weiterhin bevorzugten Weiterbildung kann die Überzugsschicht aus Leder- oder Lederimitat ausgebildet sein, wobei vorzugsweise an einer von der starren Abdeckplatte abgewandten Seite eine aufgeraute Oberfläche vorhanden ist. Die aufgeraute Oberfläche weist gute Führungseigenschaften für das Tablet auf und schont gleichzeitig das Tablet während seiner Einführung in das Rahmenelement. Darüber hinaus bietet eine Überzugsschicht aus Leder- oder Lederimitat eine sanfte, angenehme Erscheinung.

In einer weiter bevorzugten Ausbildung besteht das Lederimitat aus Mikrofasern, insbesondere aus Mikrofasern mit einer an der von der starren Abdeckplatte abgewandten Seite aufgerauten Oberfläche. Mikrofasermaterialien, wie etwa Alcantara Leder oder dergleichen, lassen sich gut verarbeiten und haben die Erscheinung und/oder die Eigenschaften eines Vliesstoffes mit Veloursledercharakter. Solche Mikrofasermaterialien sind in verschiedenen Flächenmassen unter Verwendung ultrafeiner Polyesterfasern im Stand der Technik bekannt und verfügbar.

In einer ebenfalls bevorzugten Ausführung des erfindungsgemäßen Halterungssystems ist die Führung mit einer Auskleidung versehen, die als Gleitfolie ausgebildet ist, wobei sich die Auskleidung mindestens in einem Teilbereich der Führung erstreckt, insbesondere in dem Teilbereich der Führung, in den das Tablet während seiner Einführung in das Halterungssystem gleitend eingeführt wird. Die Gleitfolie schont gleichzeitig das Tablet während und nach seiner Einführung in das Rahmenelement, da ein direkter Kontakt des Tabletrahmens mit der Führung minimiert wird. Dies ist insbesondere von Vorteil, wenn die Führung aus einem Metall, wie etwa Aluminium, ausgebildet ist.

Weiterhin kann nach einem bevorzugten Aspekt der Erfindung ein Einführbereich der Führung, an dem die Einführung des Tablets in die Führung eingeleitet wird, eine Abrundung oder eine Abschrägung aufweisen. Dies erleichtert weiterhin die Einführung des Tablets in das Rahmenelement und verringert die Gefahr der Beschädigung des Tabletrahmens, wie sie etwa an scharfen Kanten entstehen konnten.

Weiterhin kann nach einem weiteren bevorzugten Aspekt der Erfindung das Halterungssystem als Wandhalterungssystem mit einem Befestigungsmittel zu seiner Befestigung an einer Wand oder dergleichen ausgebildet sein, wobei bevorzugt das Befestigungsmittel mindestens eine Schraube und eine dazu passende durchgehende Bohrung in der Rückplatte aufweist. Alternativ dazu ist auch eine Ausbildung des Halterungssystems als Tischhalterungssystem denkbar, wobei das Halterungssystem beispielsweise eine Stütze, insbesondere eine ausklappbare Stütze hat. Auch kann das Tischhalterungssystem mit einer flachen oder abgeschrägten Basis ausgebildet sein.

Das Halterungssystem kann erfindungsgemäß vorteilhaft mit einem elektrischen Kontakt ausgebildet werden, der in der Führung vorgesehen ist und zur Verbindung mit einem entsprechenden Gegenelement am Tablet ausgebildet ist, wobei der elektrische Kontakt mit einem Kabel versehen ist, vorzugsweise zur Verbindung mit einer externen Stromquelle. Der elektrische Kontakt kann beispielsweise als USB-Stecker oder als Lightning-Stecker oder dergleichen Ausgebildet werden. Der Kontakt kann bevorzugt auch eine Haltefunktion für das Tablet im eingeführten Zustand haben.

Eine weitere bevorzugte Ausbildung der Erfindung betrifft eine in der Rückplatte ausgebildete Vertiefung zur Aufnahme der starren Abdeckplatte. Dadurch kann die starre Abdeckplatte besser und sicherer in der Rückplatte positioniert und aufgenommen werden. Somit wird die Stabilität des Halterungssystems insgesamt verbessert.

Nach einem weiteren bevorzugten Aspekt der Erfindung weist die Rückplatte eine Ausnehmung an einer Seite auf, die nicht vom Rahmenelement umgeben ist, um die Entnahme der starren Abdeckplatte aus der Rückplatte mit einem geeigneten Werkzeug zu erleichtern.

Weiterhin bevorzugt kann das Rahmenelement an seiner Innenseite im Wesentlichen als Rechteck mit einer oder zwei fehlenden Seiten ausgebildet sein. Weiter bevorzugt ist ein Quadrat mit einer oder zwei fehlenden Seiten und das Rahmenelement ist Teil eines das Quadrat umgebenden Kreises.

Die Erfindung sei nachstehend anhand von Ausführungsbeispielen unter Bezugnahme auf die Zeichnungen näher erläutert. Dort zeigen:
Fig. 1 eine perspektivische Explosionsdarstellung einer Ausführungsform der erfindungsgemäßen Halterungssystems von vorne, die als Wandhalterungssystem ausgebildet ist, wobei die Rückplatte entfernt ist;
Fig. 2 eine vergrößerte Ansicht des Einführungsbereichs der Halterungssystems der Fig. 1 mit entfernter Rückplatte;
Fig. 3 eine vergrößerte Ansicht des Kontaktbereichs der Halterungssystems der Fig. 1 mit entfernter Rückplatte;
Fig. 4 eine vergrößerte Ansicht des Einführungsbereichs der Halterungssystems der Fig. 1 mit eingesetzter Rückplatte;
Fig. 5 eine Vorderansicht des Halterungssystems der Fig. 1 vor der Einführung des Tablets;
Fig. 6 eine Vorderansicht des Halterungssystems der Fig. 1 nach der Einführung des Tablets;
Fig. 7 eine perspektivische Darstellung des Halterungssystems mit eingeführtem Tablet der Fig. 6;
Fig. 8 eine Seitenansicht des Halterungssystems der Fig. 1 ohne eingeführtes Tablet;
Fig. 9 eine Schnittansicht des Halterungssystems entlang der Linie IX-IX der Fig. 5 mit eingeführtem Tablet;
Fig. 10 eine vergrößerte Ansicht des unteren Bereichs des Halterungssystems der Fig. 9;
Fig. 11 eine perspektivische Explosionsdarstellung einer Ausbildungsform des erfindungsgemäßen Halterungssystems als Tischhalterungssystem; und
Fig. 12 eine Schnittansicht des Tischhalterungssystems der Fig. 11.

Ausführungsformen des erfindungsgemäßen Halterungssystems 1 sind beispielsweise in den Figuren der Erfindung dargestellt.

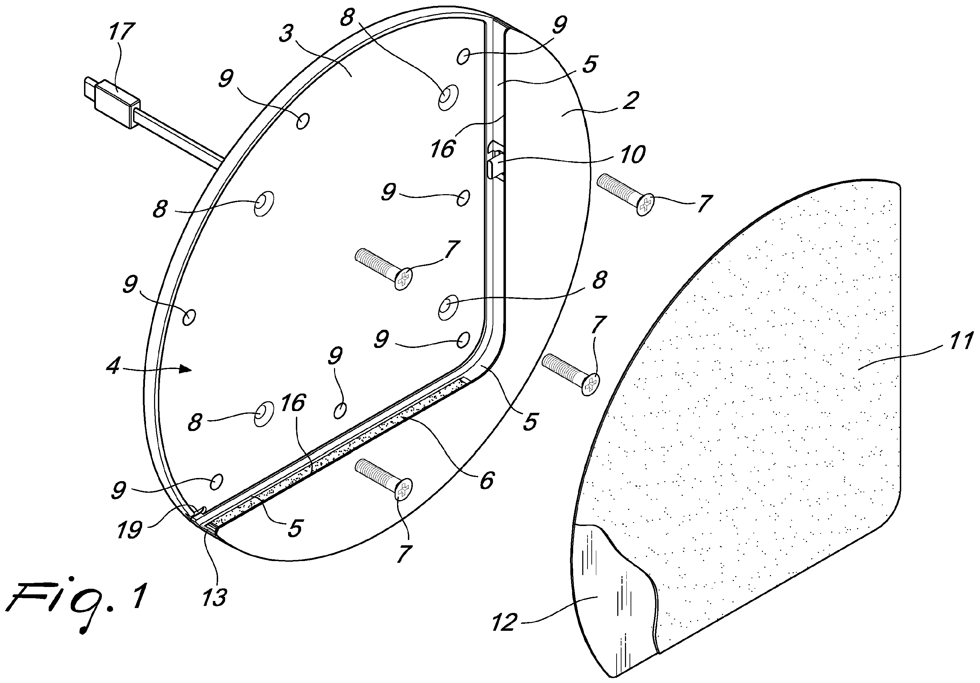

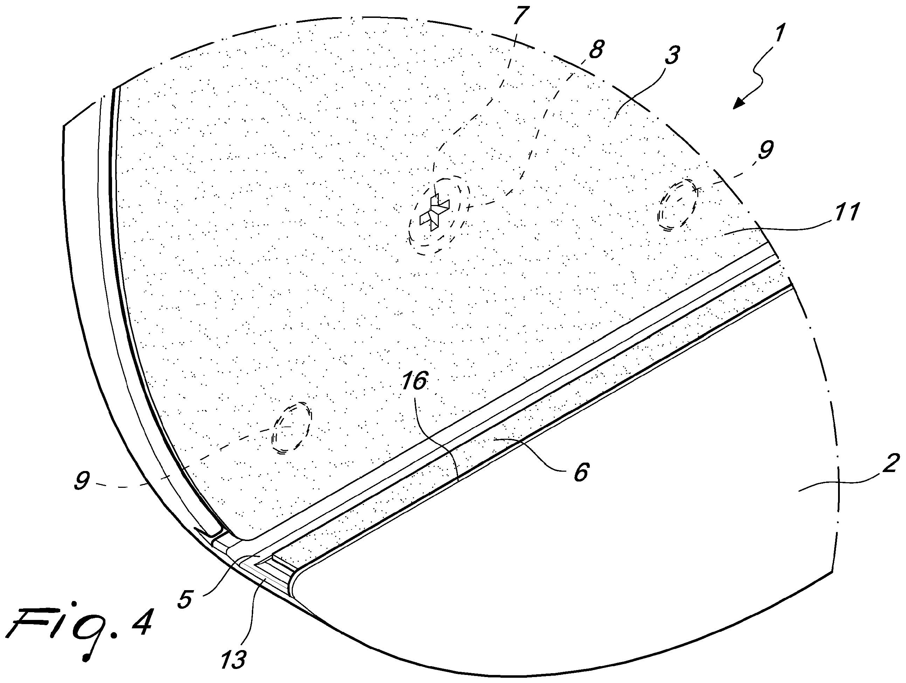

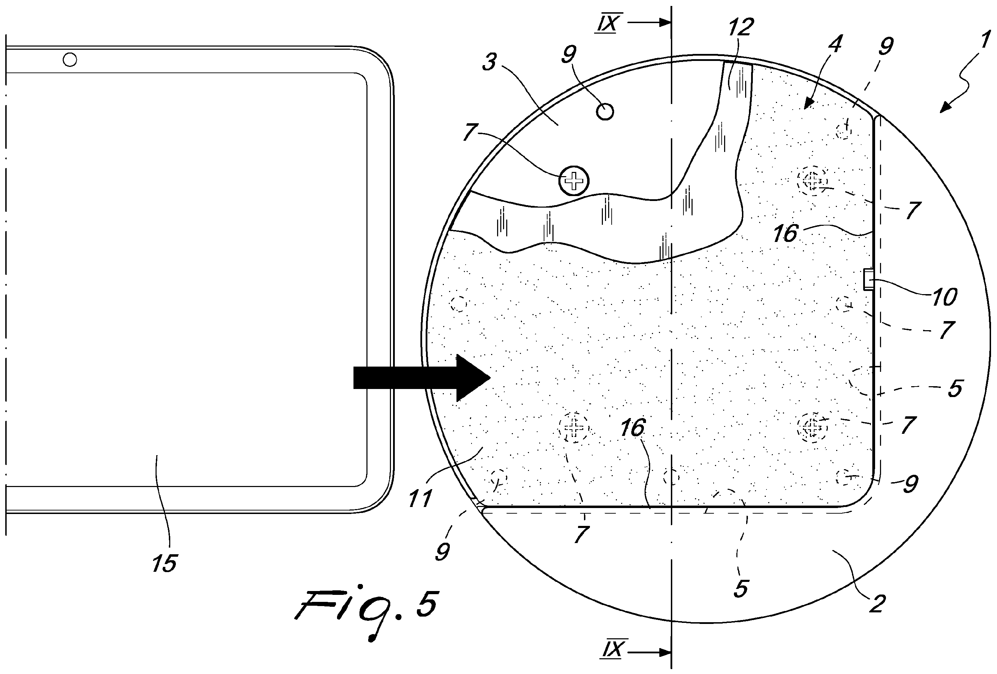

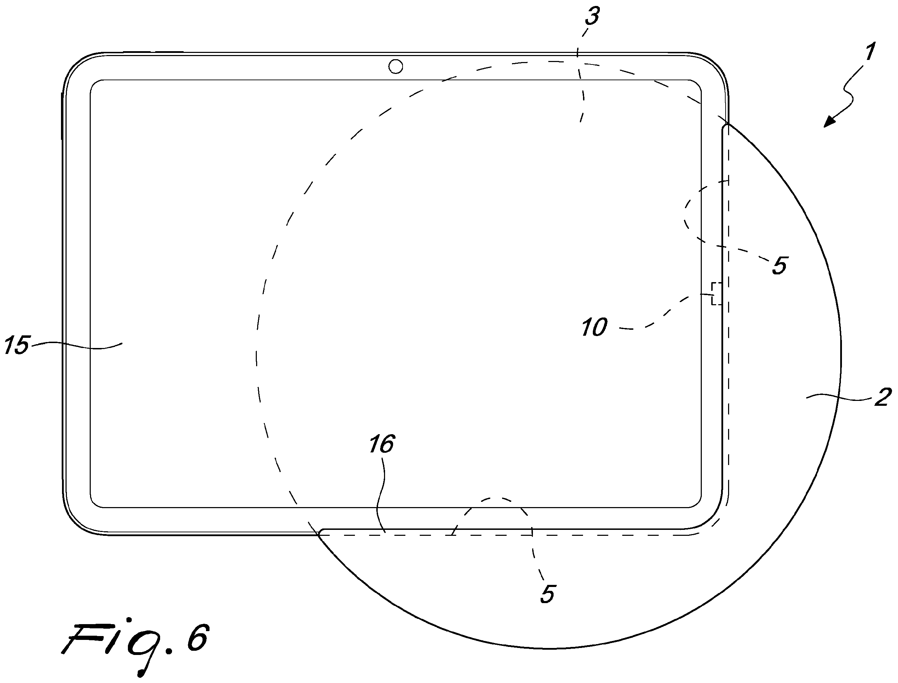

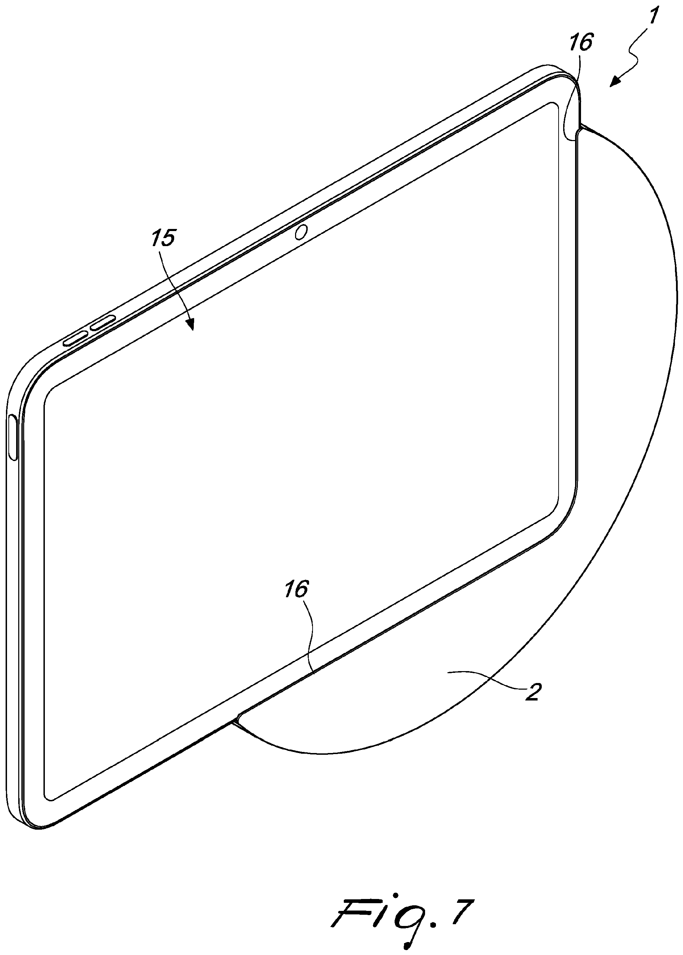

Unter Bezugnahme auf die Figuren 1 bis 10 umfassen erfindungsgemäße als Wandhalterungssystem ausgebildete Halterungssysteme 1 ein Rahmenelement 2 und eine Rückplatte 3. Die als Tischhalterungssystem ausgebildeten Ausführungsformen der Erfindung sind, was ihr Aufbau anbelangt, identisch mit den als Wandhalterungssystem ausgebildeten Ausführungsformen, abgesehen von den Mitteln, die ausschließlich für die Wandbefestigung vorgesehen sind. Die Befestigungsmittel sind in den Tischhalterungssystemen für die Anbringung einer Stütze entsprechend angepasst.

Wie beispielsweise in Fig. 1 gezeigt, umgibt das Rahmenelement 2 die Rückplatte 3 derart teilweise, dass ein Tablet 15 in das Rahmenelement 2 einführbar ist. Die Rückplatte 3 und das Rahmenelement 2 bilden vorzugsweise eine Einheit und sind fest miteinander verbunden. Das Rahmenelement 2 und die Rückplatte 3 sind vorzugsweise einstückig ausgebildet und/oder das Rahmenelement 2 und die Rückplatte 3 sind aus Aluminium ausgebildet. Das Rahmenelement 2 und die Rückplatte 3 können gegossen oder durch CNC-Fräsen oder dergleichen hergestellt werden. Das Rahmenelement 2 und die Rückplatte 3 können als getrennte Teile hergestellt werden und später zu einer Einheit verbunden werden. Auch andere Materialien wie beispielsweise Metall oder Kunststoff sind für das Rahmenelement 2 und die Rückplatte 3 denkbar und auch Kombinationen von verschiedenen Materialien. Ebenfalls können beschichtete Materialien zur Herstellung des Rahmenelements 2 und/oder der Rückplatte 3 verwendet werden. Auch kann das Rahmenelement 2 eine aufgeraute Oberfläche beispielsweise durch Sandstrahlen ausweisen.

Mit weiterer Bezugnahme auf die Fig. 1 bestimmt das Rahmenelement 2 und die Rückplatte 3 an einer Innenseite des Rahmenelements 2 einen Aufnahmeraum 4 für das Tablet 15. Der Umriss des Aufnahmeraums 4 ist vorzugsweise Teil eines Quaders mit zwei fehlenden Seiten, wobei auch ein Quader mit einer fehlenden Seite denkbar sind. Jedenfalls soll erfindungsgemäß die Öffnung des Umrisses derart bemessen sein, dass die Einführung des Tablets 15 möglich ist. Auch andere rechteckige Formen sind denkbar, wobei mindestens eine Seite des Rechtecks fehlen muss, so dass die Einführung eines Tablets 15 möglich ist.

Mit weiterer Bezugnahme auf die Figuren 1 bis 5 und 8 bis 10 weist das erfindungsgemäße Halterungssystem 1 eine Führung 5 auf, die sich zumindest teilweise an der Innenseite des Rahmenelements 2 erstreckt und zur Einführung und Aufnahme des Tablets 15 in den Aufnahmeraum 4 ausgebildet ist. Die Führung 5 hat vorteilhaft eine Führungsfunktion beim Einführen des Tablets 15 in das Rahmenelement 2 und/oder eine Haltefunktion in dem im Rahmenelement 2 eingeführten Zustand des Tablets 15.

Mit weiterer Bezugnahme auf die Figuren 1 bis 10 weist das erfindungsgemäße Halterungssystem 1 eine starre Abdeckplatte 12 auf, die lösbar mit dem Rückplatte 3 verbunden ist und den Aufnahmeraum 4 zumindest teilweise abdeckt. Aufgrund der starren Abdeckplatte 12 ist es vorteilhaft möglich, Öffnungen oder Bohrungen oder Aufnahmen oder Durchbrüche in der Rückplatte 3 bereitzustellen, ohne die Stabilität des Halterungssystems 1 und/oder die Aufnahmefähigkeit bzw. die Führungsfähigkeit der Rückplatte 3 zu beeinträchtigen. Insbesondere können somit größere Öffnungen oder Bohrungen und dergleichen realisiert werden, die insbesondere über 10% oder über 20% oder sogar über 50% der Fläche der Rückplatte 3 einnehmen.

Mit erneuter Bezugnahme auf die Figuren 1 bis 10 weist das erfindungsgemäße Halterungssystem 1 eine Überzugsschicht 11 aus Leder, Lederimitat- oder Vliesstoff, die die starre Abdeckplatte 12 an einer von der Rückplatte 3 abgewandten Seite mindestens teilweise abdeckt und die fest mit der starren Abdeckplatte 12 verbunden ist.

Vorzugsweise deckt die starre Abdeckplatte 12 den Aufnahmeraum 4 vollständig ab. Somit wird unabhängig von der Beschaffenheit der Rückplatte 3 ein einheitliches Erscheinungsbild bereitgestellt und die Stabilität und die Aufnahmefähigkeit des Halterungssystems 1 werden erhöht.

Vorzugsweise deckt die Überzugsschicht 11 die starre Abdeckplatte 12 an der von der Rückplatte 3 abgewandten Seite vollständig ab, so dass die gesamte Fläche der Abdeckplatte 12 für die schonende Führung und Aufnahme des Tablets 15 im Rahmenelement 2 bzw. Halterungssystem 1 zur Verfügung steht und so dass die gesamte Fläche des Aufnahmeraums 4 für die schonende Führung und Aufnahme des Tablets 15 im Rahmenelement 2 bzw. im Halterungssystem 1 ebenfalls zur Verfügung steht. Auch können in dieser Ausbildung sämtliche Öffnungen und/oder Bohrungen und/oder Aufnahmen und/oder Durchbrüche der Rückplatte 3 von der starren Abdeckplatte 12 cachiert werden. Durch die so vergrößerte Überzugsschicht 11 entsteht auch eine gleichmäßige Fläche im gesamten Aufnahmeraum 4.

Wie in den Figuren gezeigt, ist besonders bevorzugt die starre Abdeckplatte 12 magnetisch mit der Rückplatte 3 verbunden ist, wobei die starre Abdeckplatte 12 weiter vorzugsweise aus Metall ausgebildet ist und die Rückplatte 3 ein magnetisches Material umfasst und wobei weiter vorzugsweise das magnetische Material als mindestens ein diskreter Magnet 9 in einer entsprechenden Magnetaufnahme 14 der Rückplatte 3 ausgebildet ist. Wie in den Figuren gezeigt, kann eine Vielzahl an Magneten 9 in entsprechenden Magnetaufnahmen 14 in der Rückplatte 3 bereitgestellt werden, wobei durch die Verteilung der Magnete 9 in der Rückplatte 3 eine besser verteilte Anziehungskraft zwischen der Rückplatte 3 und der starren Abdeckplatte 12 realisiert wird. Die starre Abdeckplatte 12 erlaubt die Anzahl und Größe der Magnetaufnahmen 14 zu maximieren, wobei in diesem Zusammenhang die vollständige Abdeckung der Rückplatte 3 durch die Abdeckplatte 12 besonders vorteilhaft ist.

Die Überzugsschicht 11 kann auf der starren Abdeckplatte 2 mit einem Kleber aufgeklebt sein oder auflaminiert werden. Aufgrund ihrer leichteren Herstellbarkeit ist erfindungsgemäß die Klebeverbindung die bevorzugte Verbindung der starren Abdeckplatte 12 mit der Überzugsschicht 11.

Nach einer bevorzugten Ausbildung erstreckt sich die Führung 5 an der gesamten Innenseite des Rahmenelements 2. Somit kann insbesondere eine bessere Führung und/oder eine stabilere Aufnahme des Tablets 15 im Rahmenelement 2 bzw. im Halterungssystem 1 erzielt werden. Dabei ist zu beachten, dass wie erläutert die erfindungsgemäße die Führung 5 eine Führungsfunktion beim Einführen des Tablets 15 in das Rahmenelement 2 und/oder eine Haltefunktion in dem im Rahmenelement 2 eingeführten Zustand des Tablets 5 haben kann.

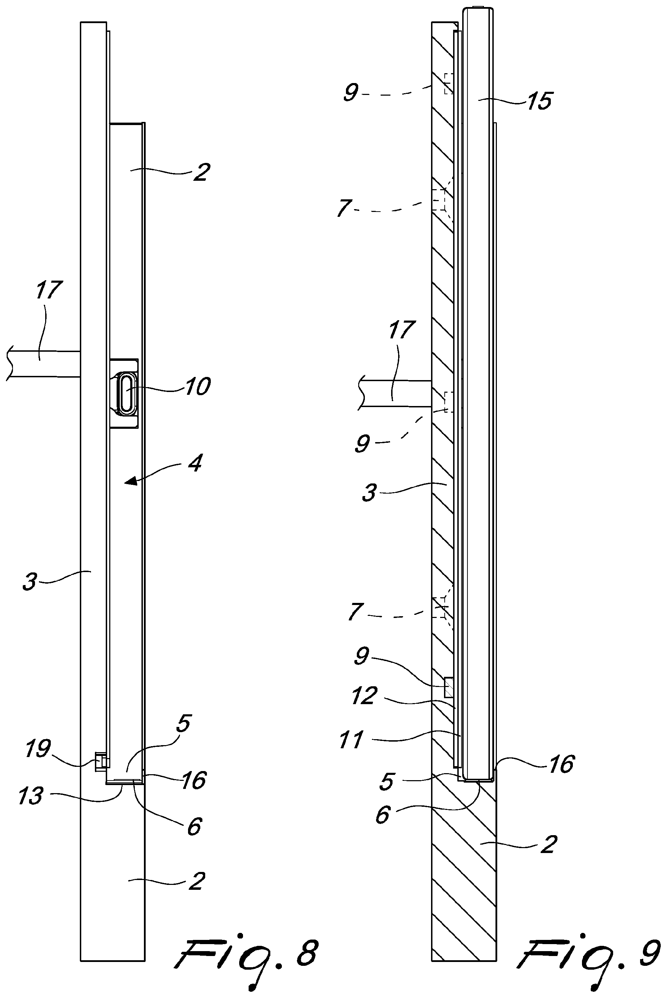

Wie insbesondere in den Figuren 8 bis 10 gezeigt, kann die Führung 5 vorteilhaft zwischen einem Überstand 16 an der Innenseite des Rahmenelements 2 und der Rückplatte 3 ausgebildet werden, so dass das Tablet 15 zwischen dem Überstand 16 und der Rückplatte 3 in das Halterungssystem 1 einführbar ist und gehalten werden kann. Vorteilhaft ist der Überstand 16 einstückig mit dem Rahmenelement 2 ausgebildet. Sofern das Rahmenelement 2 einstückig mit der Rückplatte 3 ausgebildet ist, kann der Überstand 16 auch Teil einer gesamten einstückigen Anordnung aus Rahmenelement 2 und Rückplatte 3 sein.

Bevorzugt kann die Überzugsschicht 11 aus Leder- oder Lederimitat ausgebildet werden und vorzugsweise an einer von der starren Abdeckplatte 12 abgewandten Seite eine aufgeraute Oberfläche aufweisen. Die aufgeraute Oberfläche der Überzugsschicht 11 weist gute Führungseigenschaften für das Tablet 15 auf und schont gleichzeitig das Tablet 15 während seiner Einführung in das Rahmenelement 2. Darüber hinaus bietet eine Überzugsschicht 11 aus Leder- oder Lederimitat eine sanfte, angenehme Erscheinung des Halterungssystems 1.

In einer weiter bevorzugten Ausbildung besteht das Lederimitat aus Mikrofasern, insbesondere aus Mikrofasern, mit einer an der von der starren Abdeckplatte 12 abgewandten Seite aufgerauten Oberfläche. Mikrofasermaterialien, wie etwa Alcantara Leder, lassen sich gut verarbeiten und haben die Erscheinung und/oder Eigenschaften eines Vliesstoffes mit einem Veloursledercharakter. Solche im Stand der Technik bekannte Mikrofasermaterialien sind in verschiedenen Flächenmassen unter Verwendung ultrafeiner Polyesterfasern verfügbar. Alcantara Leder ist aufgrund der Verfügbarkeit, Vielfältigkeit an Farben und Verarbeitbarkeit ein bevorzugtes Lederimitat der Erfindung.

In einer ebenfalls bevorzugten Ausführung des erfindungsgemäßen Halterungssystems 1 ist die Führung 5 mit einer Auskleidung 6 versehen, die als Gleitfolie ausgebildet ist, wobei sich die Auskleidung 6 mindestens in einem Teilbereich der Führung 5 erstreckt, insbesondere in dem Teilbereich der Führung 5, in den das Tablet 15 während seiner Einführung in das Halterungssystem 1 gleitend eingeführt wird. Eine mögliche Erstreckung des Teilbereichs ist in Fig. 1 gezeigt und entspricht der Seite oder den Seiten des Rahmenelements 2, an welcher kein nachstehend beschriebener elektrische Kontakt befindlich ist. Die Gleitfolie schont gleichzeitig das Tablet 5 während und nach seiner Einführung in das Rahmenelement 2, da ein direkter Kontakt des Tabletrahmens mit der Führung 5 minimiert wird. Dies ist insbesondere von Vorteil, wenn die Führung 5 aus einem Metall, wie etwa Aluminium, ausgebildet ist.

Gleitfolien sind erfindungsgemäß besonders bevorzugt, da sie zum Auskleiden von tribologisch beanspruchten Flächen und Formen, zur Optimierung von Transport- und Führungsaufgaben von Führungen und als Kantenschutz besonders geeignet sind.

Aufgeklebte Gleitfolien sind weiterhin besonders bevorzugt. Durch das einfache Aufkleben der Gleitfolie werden gegeneinander gleitende Oberflächen in der Bewegung geschützt. Die Geräuschkulisse wird durch das leichtgängige Gleiten reduziert. Die einfache Bearbeitbarkeit (nämlich der Zuschnitt ist mittels Schere) und der optionale selbstklebende Rücken ergeben einen einfachen Einsatz.

Als Gleitfolie kann bevorzugt eine Tribo-Tape-Gleitfolie der Firma IGUS GmbH aus Köln eingesetzt werden.

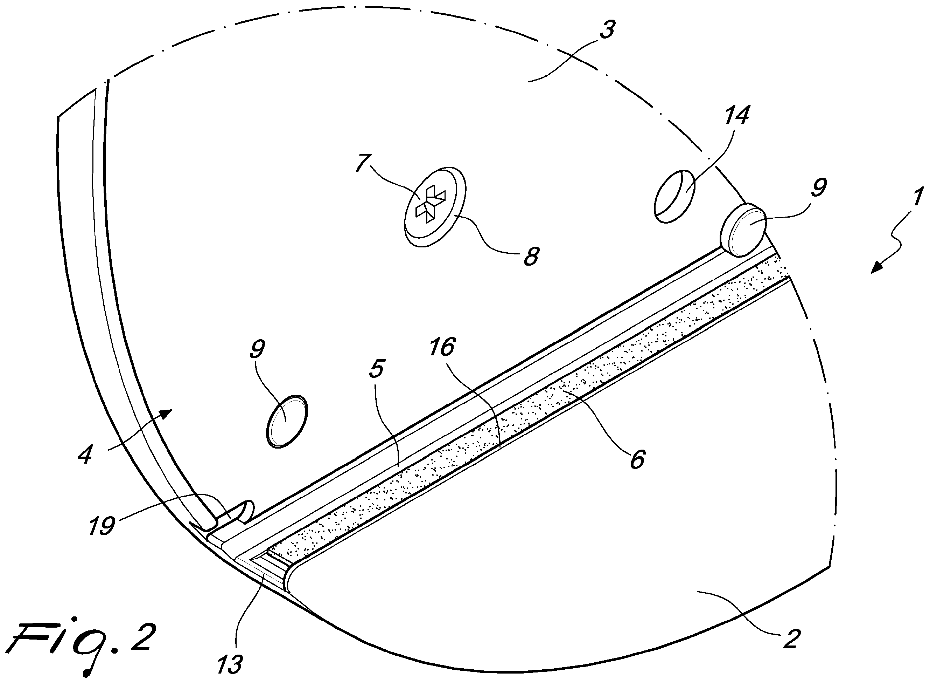

Weiterhin kann nach einem bevorzugten Aspekt der Erfindung, der insbesondere in der Fig. 2 gut zu ersehen ist, ein Einführbereich 13 der Führung 5, an dem die Einführung des Tablets 15 in die Führung 5 eingeleitet werden kann, eine Abrundung oder eine Abschrägung aufweisen. Dies erleichtert weiterhin die Einführung des Tablets 5 in das Rahmenelement 2 und verringert die Gefahr der Beschädigung des Tabletrahmens, wie sie etwa an scharfen Kanten entstehen konnten.

Weiterhin kann nach einem weiteren bevorzugten Aspekt der Erfindung, der in den Figuren 1 bis 10 gezeigt ist, das Halterungssystem 1 als Wandhalterungssystem mit einem Befestigungsmittel zu seiner Befestigung an einer Wand oder dergleichen ausgebildet sein, wobei bevorzugt das Befestigungsmittel mindestens eine Schraube 7 und eine dazu passende durchgehende Bohrung 8 in der Rückplatte 3 aufweist. Die starre Abdeckplatte 12 erlaubt die Anzahl und die Größe der durchgehenden Bohrungen 8 zu maximieren, wobei in diesem Zusammenhang die vollständige Abdeckung der Rückplatte 3 durch die Abdeckplatte 12 besonders vorteilhaft ist.

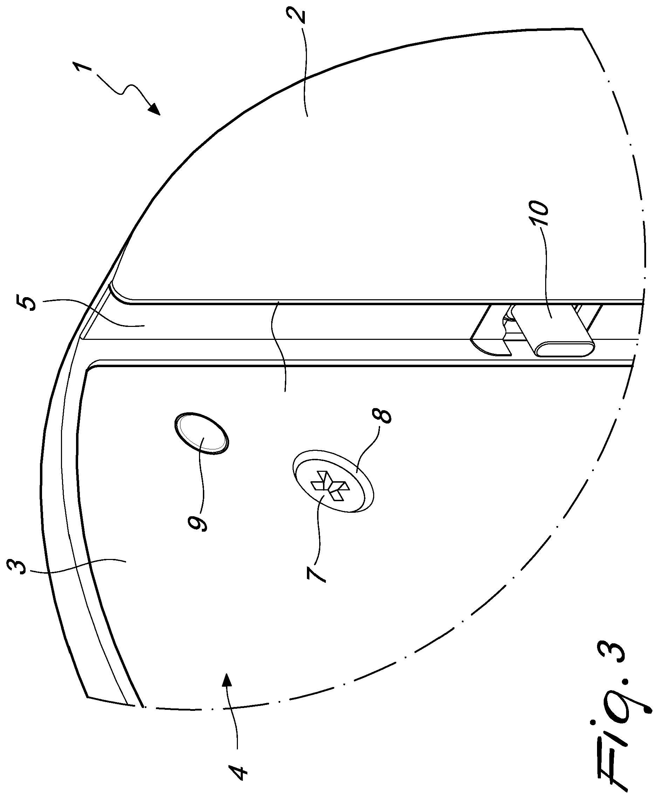

Wie beispielsweise in den Figuren 1 und 3 gezeigt, kann das Halterungssystem 1 erfindungsgemäß vorteilhaft mit einem elektrischen Kontakt 10 ausgebildet werden, der in der Führung 5 vorgesehen ist und zur Verbindung mit einem entsprechenden Gegenelement am Tablet 15 ausgebildet ist, wobei der elektrische Kontakt 10 mit einem Kabel 17 versehen ist, und zwar vorzugsweise zur Verbindung mit einer nicht gezeigten Stromquelle. Der elektrische Kontakt 10 kann beispielsweise als USB-Stecker, insbesondere wie gezeigt als USB-C-Stecker, oder Lightning-Stecker oder dergleichen Ausgebildet werden. Der elektrische Kontakt 10 kann bevorzugt auch eine Haltefunktion für das Tablet 15 im eingeführten Zustand haben.

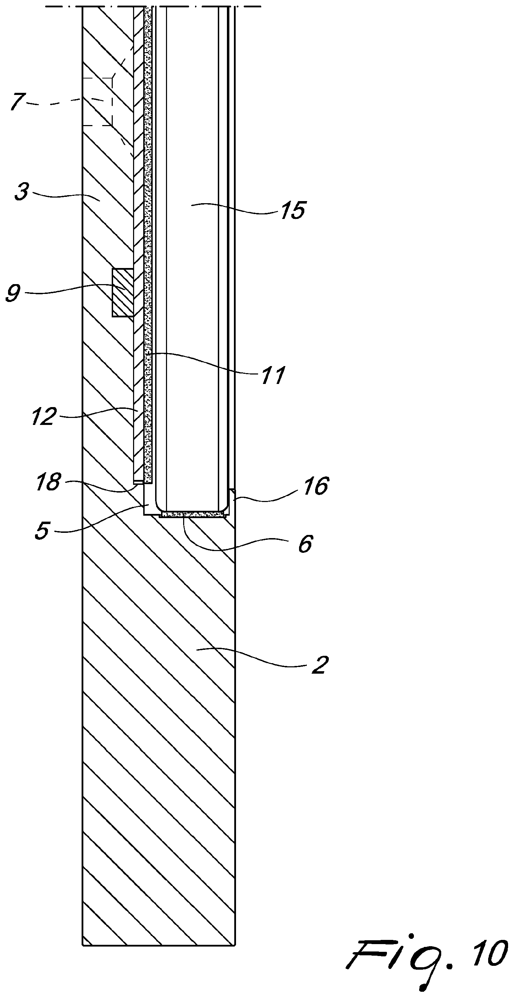

Eine weitere bevorzugte Ausbildung der Erfindung betrifft, wie beispielsweise in den Figure 9 und 10 gezeigt, eine in der Rückplatte 3 ausgebildete Vertiefung 18 zur Aufnahme der starren Abdeckplatte 12. Dadurch kann die starre Abdeckplatte 12 besser und sicherer in der Rückplatte 3 positioniert und aufgenommen werden. Somit kann die Stabilität des Halterungssystems 1 insgesamt verbessert.

Nach einem weiteren bevorzugten Aspekt der Erfindung, wie beispielsweise in den Figure 1 und 8 gezeigt, weist die Rückplatte 3 eine Ausnehmung 19 an einer Seite auf, die nicht vom Rahmenelement 2 umgeben ist, um die Entnahme der starren Abdeckplatte 12 aus der Rückplatte 3 mit einem geeigneten Werkzeug oder manuell zu erleichtern.

Weiterhin bevorzugt kann das Rahmenelement 2, wie in der Fig. 1 gezeigt, an seiner Innenseite im Wesentlichen als Quadrat mit zwei fehlenden Seiten ausgebildet sein. Auch andere Rechteckformen sind erfindungsgemäß denkbar, sofern mindestens eine Seite des Rechtecks für die Einführung des Tablets 15 frei ist.

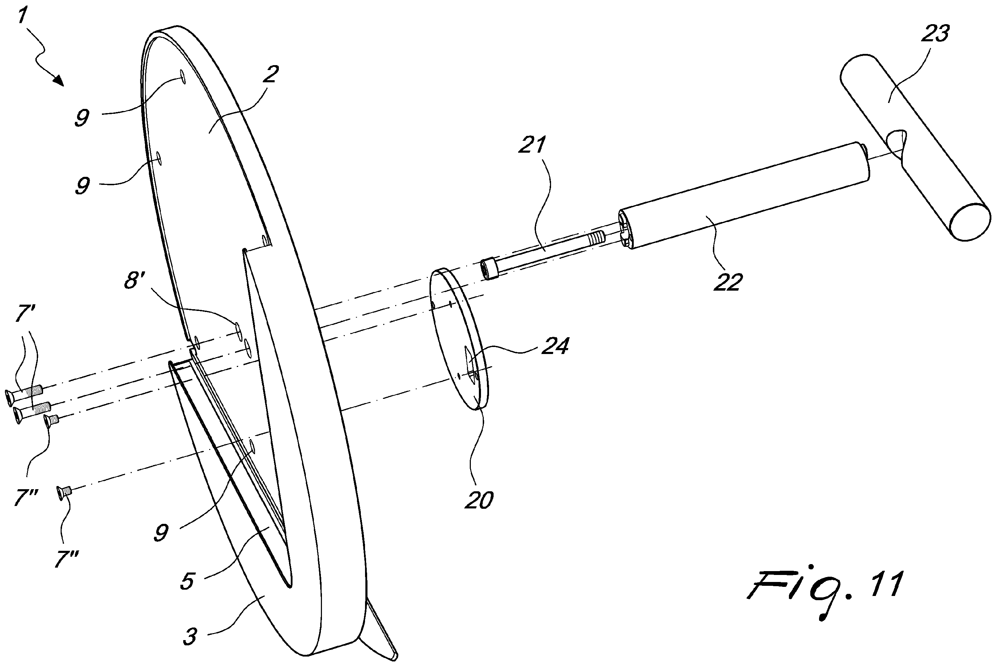

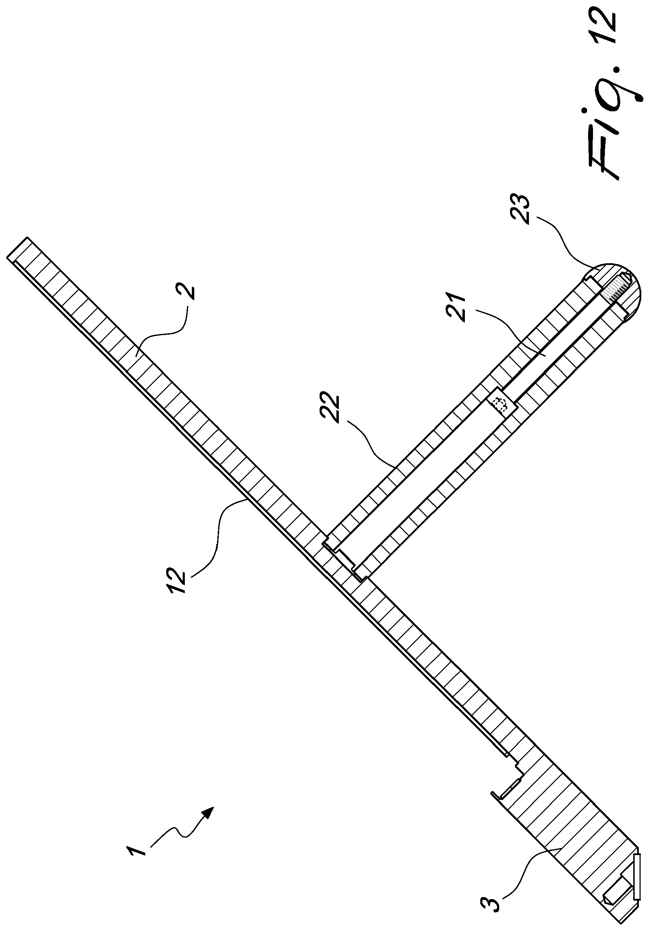

Unter Bezugnahme auf die Figuren 11 und 12 wird eine Ausführungsform des Halterungssystems 1 als Tischhalterung beschrieben. Diese Ausführungsform unterscheidet sich von dem als Wandhalterung ausgebildeten Halterungssystems 1, dadurch dass zusätzlich eine Stütze oder Basis vorhanden sind, um das Halterungssystem 1 auf einer Auflage, wie etwa einem Tisch, abzustützen.

Die Stütze kann einteilig oder, wie in den Figuren 11 und 12 dargestellt, zweiteilig ausgebildet werden. Insbesondere kann die Stütze ein erstes Stützelement 22 und ein senkrecht dazu verlaufendes zweites Stützelement 23 aufweisen, wobei eine Schraube 21 zur Befestigung der zwei Stützelemente 22 und 23 vorgesehen ist. Die Stütze kann ausklappbar oder fest ausgebildet werden.

Mindestens eine weitere Schraube 7' ist zur Befestigung der Stütze an die Rückplatte 3 vorgesehen, wobei die mindestens eine weitere Schraube 7' durch eine entsprechende durchgehende Bohrung 8' geführt ist und die Stütze an der Rückplatte 3 befestigt.

Weiterhin ist in der Fig. 11 ein Abdeckelement 20 für einen Raum in der Rückplatte 3 und/oder im Rahmenelement 2 gezeigt, durch den das Kabel 17 geführt und nach außen geleitet wird. Dazu weist das Abdeckelement 20 eine Öffnung 24 auf. Das Abdeckelement 20 kann durch weitere Schrauben 7" und entsprechende durchgehende Bohrungen in der Rückplatte 3 an diese befestigt werden. Die Öffnung 24 des Abdeckelements 20 kann vorteilhaft einen Stecker oder Buchse für die externe Stromversorgung oder dergleichen des Tablets 15 aufweisen.

Die Ausführung mit einem Raum in der Rückplatte 3 und/oder im Rahmenelement 2 ist selbstverständlich in Verbindung mit allen Ausführungsformen der Erfindung einsetzbar und der mit dem Kabel 17 gezeigte Stecker kann in allen Ausführungsformen in die Öffnung 20 des der Abdeckung 20 eingesetzt werden.

Es versteht sich, dass, wenn ein Element als "auf" einem anderen Element angebracht, damit "verbunden", "gekoppelt" oder "in Kontakt" damit bezeichnet wird, das Element sich dann direkt auf dem anderen Element befinden, damit verbunden oder gekoppelt sein kann, oder dass außerdem dazwischen liegende Elemente vorhanden sein können, die entweder nur dazwischen liegen oder das Element mit dem anderen Element verbinden oder koppeln oder in Kontakt halten. Wenn hingegen ein Element als "direkt auf" einem anderen Element, damit "direkt verbunden", "direkt gekoppelt" oder "direkt in Kontakt" bezeichnet wird, ist dies dahingehend zu verstehen, dass keine dazwischen liegenden Elemente vorhanden sind.

Obwohl die Ausdrücke "erstes", "zweites" usw. hierin verwendet werden können, um verschiedene Elemente, Komponenten, Bereiche und/oder Abschnitte zu bezeichnen, sind diese Elemente, Komponenten, Bereiche und/oder Abschnitte nicht durch diese Ausdrücke beschränkt. Die Ausdrücke werden nur verwendet, um ein Element, eine Komponente, einen Bereich oder Abschnitt von einem anderen Element, einer anderen Komponente, einem anderen Bereich oder Abschnitt zu unterscheiden. Daher kann ein erstes Element, eine erste Komponente, ein erster Bereich oder Abschnitt, die unten behandelt sind, als zweites Element, zweite Komponente, zweiter Bereich oder Abschnitt bezeichnet werden, ohne von den Lehren der vorliegenden Erfindung abzuweichen.

Ausführungsformen der Erfindung sind hierin mit Bezug auf Ansichten beschrieben, die schematische Darstellungen von Ausführungsformen der Erfindung sind. Daher kann sich die tatsächliche Dicke der Komponenten davon unterscheiden, und Abweichungen von den Formen in den Darstellungen, zum Beispiel aufgrund von Herstellungsverfahren und/oder Toleranzen, sind zu erwarten. Ausführungsformen der Erfindung sind nicht als auf die speziellen Formen der hierin dargestellten Bereiche beschränkt zu verstehen, sondern sollen Abweichungen der Formen einschließen, die zum Beispiel aus der Art der Herstellung resultieren. Ein Bereich, der als quadratisch oder rechteckig dargestellt oder bezeichnet ist, hat typischerweise auch gerundete oder gekrümmte Merkmale aufgrund normaler Herstellungstoleranzen. Daher sind die in den Figuren dargestellten Bereiche schematischer Art, und ihre Formen dienen nicht dazu, die genaue Form eines Bereichs einer Vorrichtung darzustellen oder den Schutzumfang der Erfindung zu beschränken.

Zum Ausdruck "umfassen" sei zur Klarheit gesagt, dass, wenn ein erster Vorrichtungsteil einen zweiten Vorrichtungsteil umfasst, dies bedeutet, dass der erste Vorrichtungsteil den zweiten Vorrichtungsteil "aufweist" und nicht notwendigerweise anordnungsmäßig umschließt, wenn es sich nicht beispielsweise um eine Beschreibung einer lagemäßigen und formenmäßigen Anordnung handelt.

Weitere mögliche Ausbildungsformen sind in den folgenden Ansprüchen beschrieben. Insbesondere können auch die verschiedenen Merkmale der oben beschriebenen Ausführungsformen miteinander kombiniert werden, soweit sie sich nicht technisch ausschließen.

Die in den Ansprüchen genannten Bezugszeichen dienen nur der besseren Verständlichkeit und beschränken die Ansprüche in keiner Weise auf die in den Figuren dargestellten Formen.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste

- 1: Halterungssystem
- 2: Rahmenelement
- 3: Rückplatte
- 4: Aufnahmeraum
- 5: Führung
- 6: Auskleidung
- 7: Schrauben für Wandbefestigung
- 7': Schrauben zur Befestigung der Stütze der Tischversion
- 7": Schrauben zur Befestigung des Abdeckelements
- 8: durchgehende Bohrungen für Wandbefestigung
- 8': durchgehende Bohrungen für die Schrauben zur Befestigung der Stütze der Tischversion
- 9: Magnete
- 10: elektrischer Kontakt
- 11: Überzugsschicht aus Leder, Lederimitat- oder Vliesstoff
- 12: starre Abdeckplatte
- 13: Einführbereich der Führung
- 14: Magnetaufnahmen
- 15: Tablet
- 16: Überstand der Führung
- 17: Kabel
- 18: Vertiefung in der Rückplatte zur Aufnahme der starren Abdeckplatte
- 19: Ausnehmung zur Entnahme der starren Abdeckplatte aus der Rückplatte
- 20: Abdeckelement
- 21: Schraube zur Verbindung des ersten und zweiten Stützelements der Stütze
- 22: erstes Stützelement
- 23: zweiter Stützelement
- 24: Öffnung des Abdeckelements

## Patentansprüche

1. Halterungssystem (1) für ein Tablet (15), wobei das Halterungssystem (1) Folgendes umfasst:
ein Rahmenelement (2);
eine Rückplatte (3), die vom Rahmenelement (2) teilweise umgeben ist, wobei das Rahmenelement (2) und die Rückplatte (3) an einer Innenseite des Rahmenelements (2) einen Aufnahmeraum (4) für das Tablet (15) bestimmen;
eine Führung (5), die sich zumindest teilweise an der Innenseite des Rahmenelements (2) erstreckt und zur Einführung und Aufnahme des Tablets (15) in den Aufnahmeraum (4) ausgebildet ist;
eine starre Abdeckplatte (12), die den Aufnahmeraum (4) zumindest teilweise abdeckt; und
eine Überzugsschicht (11) aus Leder, Lederimitat- oder Vliesstoff, die die starre Abdeckplatte (12) an einer von der Rückplatte (3) abgewandten Seite mindestens teilweise abdeckt und die fest mit der starren Abdeckplatte (12) verbunden ist, **dadurch gekennzeichnet, dass** die Abdeckplatte (12) lösbar mit dem Rückplatte (3) verbunden ist, wobei die lösbare Verbindung der starren Abdeckplatte (12) mit der Rückplatte (3) ausgebildet ist, um einen leichten Austausch der starren Abdeckplatte (12) samt der Überzugsschicht (11) zu gestatten.

2. Halterungssystem (1) für ein Tablet (15) nach Anspruch 1, wobei die Überzugsschicht (11) die starre Abdeckplatte (12) an der von der Rückplatte (3) abgewandten Seite vollständig abdeckt.

3. Halterungssystem (1) für ein Tablet (15) nach Anspruch 1 oder 2, wobei die starre Abdeckplatte (12) den Aufnahmeraum (4) vollständig abdeckt.

4. Halterungssystem (1) für ein Tablet (15) nach einem oder mehreren der voranstehenden Ansprüche, wobei die starre Abdeckplatte (12) magnetisch mit der Rückplatte (3) verbunden ist und wobei die starre Abdeckplatte (12) vorzugsweise aus Metall ausgebildet ist und die Rückplatte (3) ein magnetisches Material umfasst und wobei weiter das magnetische Material vorzugsweise als mindestens ein diskreter Magnet (9) in einer entsprechenden Magnetaufnahme (14) der Rückplatte (3) ausgebildet ist und/oder
wobei die Überzugsschicht (11) auf der starren Abdeckplatte (2) mit einem Kleber aufgeklebt oder auflaminiert ist.

5. Halterungssystem (1) für ein Tablet (15) nach einem oder mehreren der voranstehenden Ansprüche, wobei sich die Führung (5) an der gesamten Innenseite des Rahmenelements (2) erstreckt, und/oder
wobei die Führung (5) zwischen einem Überstand (16) an der Innenseite des Rahmenelements (2) und der Rückplatte (3) ausgebildet ist, so dass das Tablet (15) zwischen dem Überstand (16) und der Rückplatte (3) in das Halterungssystem (1) einführbar ist und gehalten werden kann.

6. Halterungssystem (1) für ein Tablet (15) nach einem oder mehreren der voranstehenden Ansprüche, wobei die Überzugsschicht (11) aus Leder- oder Lederimitat ausgebildet ist und vorzugsweise an einer von der starren Abdeckplatte (12) abgewandten Seite eine aufgeraute Oberfläche aufweist wobei vorzugsweise das Lederimitat aus Mikrofasern besteht, insbesondere aus Mikrofasern mit einer an der von der starren Abdeckplatte (12) abgewandten Seite aufgerauten Oberfläche.

7. Halterungssystem (1) für ein Tablet (15) nach einem oder mehreren der voranstehenden Ansprüche, wobei die Führung (5) mit einer Auskleidung (6) versehen ist, die als Gleitfolie ausgebildet ist, wobei sich die Auskleidung (6) mindestens in einem Teilbereich der Führung (5) erstreckt, insbesondere in dem Teilbereich der Führung (5), in den das Tablet (15) während seiner Einführung in das Halterungssystem (1) gleitend eingeführt wird.

8. Halterungssystem (1) für ein Tablet (15) nach einem oder mehreren der voranstehenden Ansprüche, wobei ein Einführbereich (13) der Führung (5), an dem die Einführung des Tablets (15) in die Führung (5) eingeleitet wird, eine Abrundung oder eine Abschrägung aufweist.

9. Halterungssystem (1) für ein Tablet (15) nach einem oder mehreren der voranstehenden Ansprüche, wobei das Halterungssystem (1) als Wandhalterungssystems mit einem Befestigungsmittel (7, 8) zu seiner Befestigung an einer Wand oder dergleichen ausgebildet ist, wobei das Befestigungsmittel (7, 8) mindestens eine Schraube (7) und eine dazu passende durchgehende Bohrung (8) in der Rückplatte (3) aufweist oder wobei das Halterungssystem (1) als Tischhalterungssystems mit einer Stütze (22, 23), insbesondere einer ausklappbaren Stütze ausgebildet ist.

10. Halterungssystem (1) für ein Tablet (15) nach einem oder mehreren der voranstehenden Ansprüche, wobei das Halterungssystem (1) mit einem elektrischen Kontakt (10) ausgebildet ist, der in der Führung (5) vorgesehen ist und zur Verbindung mit einem entsprechenden Gegenelement am Tablet (15) ausgebildet ist, wobei der elektrische Kontakt (10) mit einem Kabel (17) versehen ist, vorzugsweise zur Verbindung mit einer Stromquelle.

11. Halterungssystem (1) für ein Tablet (15) nach Anspruch 10, wobei das Kabel (17) durch einen Raum in der Rückplatte (3) und/oder im Rahmenelement (2) geleitet und durch eine Öffnung (24) in einem Abdeckelement (20) des Raumes ausgeleitet wird, wobei das Abdeckelement (20) vorzugsweise abnehmbar ist.

12. Halterungssystem (1) für ein Tablet (15) nach einem oder mehreren der voranstehenden Ansprüche, wobei die Rückplatte (3) mit einer Vertiefung (18) zur Aufnahme der starren Abdeckplatte (12) ausgebildet ist.

13. Halterungssystem (1) für ein Tablet (15) nach einem oder mehreren der voranstehenden Ansprüche, wobei die Rückplatte (3) eine Ausnehmung (19) an einer Seite umfasst, die nicht vom Rahmenelement (2) umgeben ist, um die Entnahme der starren Abdeckplatte (12) aus der Rückplatte (3) mit einem geeigneten Werkzeug zu erleichtern.

14. Halterungssystem (1) für ein Tablet (15) nach einem oder mehreren der voranstehenden Ansprüche, wobei das Rahmenelement (2) an seiner Innenseite im Wesentlichen als Rechteck mit einer oder zwei fehlenden Seiten ausgebildet ist.

15. Halterungssystem (1) für ein Tablet (15) nach einem oder mehreren der voranstehenden Ansprüche, wobei das Rahmenelement (2) und die Rückplatte (3) einstückig ausgebildet sind und/oder wobei das Rahmenelement (2) und die Rückplatte (3) aus Aluminium ausgebildet sind; oder
wobei das Rahmenelement (2), die Führung (5) und die Rückplatte (3) einstückig ausgebildet sind und/oder wobei das Rahmenelement (2), die Führung (5) und die Rückplatte (3) aus Aluminium ausgebildet sind.

## Claims

1. Holding system (1) for a tablet (15), the holding system (1) comprising:
a frame element (2);
a back plate (3) partially surrounded by the frame element (2), the frame element (2) and the back plate (3) defining a receiving space (4) for the tablet on an inside of the frame element (2);
a guide (5) extending at least partially on the inside of the frame element (2) and adapted for the insertion and accommodation of the tablet (15) in the receiving space (4);
a rigid cover plate (12) which at least partially covers the receiving space (4); and
a coating (11) made of leather, leatherette or non-woven fabric which at least partially covers the rigid cover plate (12) on a side facing away from the back plate (3) and which is rigidly coupled with the rigid cover plate (12);
**characterised in that** the cover plate (12) is releasably coupled with the back plate (3), the releasable coupling of the rigid cover plate (12) with the back plate (3) being adapted to allow easy replacement of the rigid cover plate (12) together with the coating (11).

2. Holding system (1) for a tablet (15) according to Claim 1, the coating (11) completely covering the rigid cover plate (12) on the side facing away from the back plate (3).

3. Holding system (1) for a tablet (15) according to Claim 1 or 2, the rigid cover plate (12) completely covering the receiving space (4).

4. Holding system (1) for a tablet (15) according to one or more of the above Claims, the rigid cover plate (12) being magnetically coupled with the back plate (3) and the rigid cover plate (12) preferably being made of metal and the back plate (3) comprising a magnetic material, furthermore the magnetic material being preferably configured as at least one discrete magnet (9) in a corresponding magnet seat (14) of the back plate (3), and/or
the coating (11) being glued with an adhesive or laminated onto the rigid cover plate (2).

5. Holding system (1) for a tablet (15) according to one or more of the above Claims, the guide (5) extending over the entire inside of the frame element (2), and/or
the guide (5) being formed between a projection (16) on the inside of the frame element (2) and the back plate (3) so that the tablet (15) is insertable and can be retained in the holding system (1) between the projection (16) and the back plate (3).

6. Holding system (1) for a tablet (15) according to one or more of the above Claims, the coating (11) being made of leather or leatherette and preferably having a napped surface on a side facing away from the rigid cover plate (12), the leatherette preferably consisting of microfibers, in particular microfibers having a napped surface on the side facing away from the rigid cover plate (12).

7. Holding system (1) for a tablet (15) according to one or more of the above Claims, the guide (5) being provided with a lining (6) formed as a sliding film, the lining (6) extending at least in part of the guide (5), in particular the part of the guide (5) into which the tablet (15) is slidingly inserted during its insertion into the holding system (1).

8. Holding system (1) for a tablet (15) according to one or more of the above Claims, an insertion region (13) of the guide (5) where insertion of the tablet (15) into the guide (5) is commenced having a rounding or a chamfer.

9. Holding system (1) for a tablet (15) according to one or more of the above Claims, the holding system (1) being formed as a wall mount system having a fastening means (7, 8) for fastening to a wall or the like, the fastening means (7, 8) having at least one screw (7) and a matching bore hole (8) in the back plate (3) or the holding system (1) being formed as a table mount system having a support (22, 23), in particular a tiltable support.

10. Holding system (1) for a tablet (15) according to one or more of the above Claims, the holding system (1) being equipped with an electrical contact (10) provided in the guide (5) and formed for coupling with a corresponding counterelement on the tablet (15), the electrical contact (10) being equipped with a cable (17), preferably for connection to a power source.

11. Holding system (1) for a tablet (15) according to Claim 10, the cable (17) being guided through a space in the back plate (3) and/or in the frame element (2) and out through an opening (24) in a cover element (20) of the space, the cover element (20) being preferably removable.

12. Holding system (1) for a tablet (15) according to one or more of the above Claims, the back plate (3) being provided with a recess (18) for receiving the rigid cover plate (12).

13. Holding system (1) for a tablet (15) according to one or more of the above Claims, the back plate (3) having a recess (19) on a side not surrounded by the frame element (2) so as to facilitate removal of the rigid cover plate (12) from the back plate (3) by means of a suitable tool.

14. Holding system (1) for a tablet (15) according to one or more of the above Claims, the frame element (2), on its inside, being substantially formed as a rectangle with one or two missing sides.

15. Holding system (1) for a tablet (15) according to one or more of the above Claims, the frame element (2) and the back plate (3) being formed in one piece and/or the frame element (2) and the back plate (3) being made of aluminium; or
the frame element (2), the guide (5) and the back plate (3) being formed in one piece and/or the frame element (2), the guide (5) and the back plate (3) being made of aluminium.

## Revendications

1. Système de fixation (1) pour une tablette (15), le système de fixation (1) comprenant :
un élément de cadre (2) ;
une plaque arrière (3) partiellement entourée par l'élément de cadre (2), où l'élément de cadre (2) et la plaque arrière (3) définissant, sur une face intérieure de l'élément de cadre (2), un espace de logement (4) destiné à la tablette (15) ;
un guide (5) qui s'étend au moins partiellement sur la face intérieure de l'élément de cadre (2) et est conçu pour l'insertion et le logement de la tablette (15) dans l'espace de logement (4) ;
une plaque de recouvrement rigide (12) qui recouvre au moins partiellement l'espace de logement (4) ; et
une couche de revêtement (11) en cuir, en simili-cuir ou en non-tissé, qui recouvre au moins partiellement la plaque de recouvrement rigide (12) au moins partiellement sur un côté opposé à la plaque arrière (3) et qui est solidement reliée à la plaque de recouvrement rigide (12), **caractérisé en ce que** la plaque de recouvrement (12) est reliée de manière amovible à la plaque arrière (3), où la liaison amovible de la plaque de recouvrement rigide (12) avec la plaque arrière (3) étant conçue pour permettre un remplacement aisé de la plaque de recouvrement rigide (12) ainsi que de la couche de revêtement (11).

2. Système de fixation (1) pour une tablette (15) selon la revendication 1, où la couche de revêtement (11) recouvre entièrement la plaque de recouvrement rigide (12) du côté opposé à la plaque arrière (3).

3. Système de fixation (1) pour une tablette (15) selon la revendication 1 ou 2, où la plaque de recouvrement rigide (12) recouvre entièrement l'espace de logement (4).

4. Système de fixation (1) pour une tablette (15) selon une ou plusieurs des revendications précédentes, où la plaque de recouvrement rigide (12) est reliée magnétiquement à la plaque arrière (3) et où la plaque de recouvrement rigide (12) est de préférence réalisée en métal et la plaque arrière (3) comprend un matériau magnétique, et où, en outre, le matériau magnétique se présente de préférence sous la forme d'au moins un aimant discret (9) logé dans un logement magnétique correspondant (14) de la plaque arrière (3) et/ou
où la couche de revêtement (11) est collée à l'aide d'un adhésif ou laminée sur la plaque de recouvrement rigide (2).

5. Système de fixation (1) pour une tablette (15) selon l'une ou plusieurs des revendications précédentes, où le guide (5) s'étend sur toute la face intérieure de l'élément de cadre (2), et/ou
où le guide (5) est formé entre un rebord (16) situé sur la face intérieure de l'élément de cadre (2) et la plaque arrière (3), de sorte que la tablette (15) puisse être insérée et maintenue dans le système de fixation (1) entre le rebord (16) et la plaque arrière (3).

6. Système de fixation (1) pour une tablette (15) selon une ou plusieurs des revendications précédentes, où la couche de revêtement (11) est réalisée en cuir ou en simili-cuir et présente de préférence, sur une face opposée à la plaque de recouvrement rigide (12), une surface rugueuse, le simili-cuir étant de préférence constitué de microfibres, en particulier de microfibres dont la surface opposée à la plaque de recouvrement rigide (12) est rugueuse.

7. Système de fixation (1) pour une tablette (15) selon l'une ou plusieurs des revendications précédentes, où le guide (5) est muni d'un revêtement (6) conçu comme une feuille de glissement, où le revêtement (6) s'étendant au moins dans une partie du guide (5), en particulier dans la partie du guide (5) dans laquelle la tablette (15) est introduite par glissement lors de son insertion dans le système de fixation (1).

8. Système de fixation (1) pour une tablette (15) selon l'une ou plusieurs des revendications précédentes, où une zone d'insertion (13) du guide (5), au niveau de laquelle commence l'insertion de la tablette (15) dans le guide (5), présente un arrondi ou un biseau.

9. Système de fixation (1) pour une tablette (15) selon une ou plusieurs des revendications précédentes, où le système de fixation (1) étant conçu comme un système de fixation murale comportant un moyen de fixation (7, 8) destiné à sa fixation sur un mur ou un support similaire, le moyen de fixation (7, 8) comportant au moins une vis (7) et un alésage traversant (8) correspondant dans la plaque arrière (3), ou où le système de fixation (1) est conçu comme un système de fixation de table comportant un support (22, 23), en particulier un support rabattable.

10. Système de fixation (1) pour une tablette (15) selon l'une ou plusieurs des revendications précédentes, le système de fixation (1) étant muni d'un contact électrique (10) prévu dans le guide (5) et conçu pour être relié à un élément correspondant sur la tablette (15), le contact électrique (10) étant muni d'un câble (17), de préférence destiné à être relié à une source d'alimentation.

11. Système de fixation (1) pour une tablette (15) selon la revendication 10, où le câble (17) est acheminé à travers un espace situé dans la plaque arrière (3) et/ou dans l'élément de cadre (2) et sort par une ouverture (24) pratiquée dans un élément de recouvrement (20) de cet espace, l'élément de recouvrement (20) étant de préférence amovible.

12. Système de fixation (1) pour une tablette (15) selon une ou plusieurs des revendications précédentes, où la plaque arrière (3) étant pourvue d'un renfoncement (18) destiné à recevoir la plaque de recouvrement rigide (12).

13. Système de fixation (1) pour une tablette (15) selon une ou plusieurs des revendications précédentes, la plaque arrière (3) comportant un évidement (19) sur un côté qui n'est pas entouré par l'élément de cadre (2), afin de faciliter le retrait de la plaque de recouvrement rigide (12) de la plaque arrière (3) à l'aide d'un outil approprié.

14. Système de fixation (1) pour une tablette (15) selon l'une ou plusieurs des revendications précédentes, l'élément de cadre (2) étant conformé, sur sa face intérieure, essentiellement en rectangle dont un ou deux côtés sont manquants.

15. Système de fixation (1) pour une tablette (15) selon une ou plusieurs des revendications précédentes, où l'élément de cadre (2) et la plaque arrière (3) sont réalisés d'un seul tenant et/ou où l'élément de cadre (2) et la plaque arrière (3) sont réalisés en aluminium ; ou
où l'élément de cadre (2), le guide (5) et la plaque arrière (3) sont formés d'un seul tenant et/ou où l'élément de cadre (2), le guide (5) et la plaque arrière (3) sont réalisés en aluminium.
